# EUROPEAN PATENT SPECIFICATION

(11) **EP 2 493 162 B1**
(45) Date of publication and mention of the grant of the patent: **31.07.2013**
(21) Application number: 11156238.5
(22) Date of filing: 28.02.2011
(51) Int. Cl.: H04M 1/725, H04M 1/02, H04L 29/08

(54) **Communication system with NFC transfer of different data sets based upon keyboard mode and related methods**
Kommunikationssystem mit NFC-Übertragung verschiedener Datensätze auf Grundlage des Tastaturmodus und zugehörige Verfahren
Système de communication avec un transfert NFC de différents ensembles de données basé sur un mode clavier et procédés correspondants

(43) Date of publication of application: 29.08.2012
(73) Proprietor: Research In Motion Limited, Waterloo, ON N2L 3W8 (CA)
(72) Inventor: Hill, Thomas Casey, Rolling Meadows, IL 60008 (US)
(74) Representative: Greenaway, Martin William

(56) References cited:
- WO-A1-2010/018468
- WO-A1-2010/101755
- US-A1- 2007 042 807

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

Closely related art includes US2007/042807 and WO 2010/101755.

US2007/042807 describes a compound portable computing device comprising two or more separate portable devices coupled over a wireless link.

WO 2010/101755 describes a method, a tap initiator, and tap target in a close proximity communication.

Aspects of the invention are defined in the appended independent claims.

### Brief Description of the Drawings

FIG. 1 is a schematic block diagram of an example embodiment of a wireless communication system.

FIG. 2 is a flowchart illustrating operation of the wireless communication system of FIG. 1.

FIG. 3 is a front plan view of an example embodiment of a mobile wireless communications device.

FIG. 4 is a front plan view of another example embodiment of a mobile wireless communications device.

FIG. 5 is a side view of yet another example embodiment of a mobile wireless communications device.

FIG. 6 is a schematic block diagram illustrating example components of a mobile wireless communications device that may be used with the wireless communication system of FIG. 1.

### Detailed Description of the Preferred Embodiments

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in alternative embodiments.

Generally speaking, a communication system may include at least one NFC device, and at least one mobile wireless communications device having a plurality of different selectable keyboard configuration modes and comprising an NFC circuit, and a controller coupled to the NFC circuit. The controller may be configured to determine a selected keyboard configuration mode, and selectively communicate a respective set of data from among a plurality of different sets of data with the at least one NFC device based upon the selected keyboard configuration mode. Advantageously, the controller may receive the appropriate set of data irregardless of the selected keyboard configuration mode.

In some embodiments, the controller may be configured to receive the respective set of data from the at least one NFC device based upon the selected keyboard configuration mode. In other embodiments, the controller may be configured to transmit the respective set of data to the at least one NFC device based upon the selected keyboard configuration mode. Of course, in other embodiments, the communication may be both transmitting and receiving.

More specifically, the different sets of data may comprise a text set of data and a video set of data. The different sets of data may be associated with a same subject matter, for example, an advertisement. In some embodiments, the controller may be configured to receive at least two different sets of data from the different sets, display a respective set of data from among the at least two different sets of data based upon the selected keyboard configuration mode, and store the other set of data from among the at least two different sets of data.

For example, the at least one NFC device may be associated with a service position, and the different sets of data may be associated with the service position, such a window advertisement or a commercial kiosk. In example embodiments, the at least one mobile wireless communications device may comprise a slider keyboard cooperating with the controller, and the different selectable keyboard configuration modes may comprise a slider keyboard open configuration mode and a slider keyboard closed configuration mode. In other example embodiments, the at least one mobile wireless communications device may comprise a touch screen display, and the different selectable keyboard configuration modes may comprise a virtual keyboard configuration on mode and a virtual keyboard configuration off mode. In yet other example embodiments, the at least one mobile wireless communications device may comprise a first housing carrying the controller and the NFC circuit, a second housing, a hinge coupling the first and second housings, and a clamshell keyboard cooperating with said controller. The different selectable keyboard configuration modes may comprise a clamshell keyboard open configuration mode and a clamshell keyboard closed configuration mode.

Another example aspect is directed to a method of operating a mobile wireless communications device having a plurality of different selectable keyboard configuration modes. The method may comprise determining a selected keyboard configuration mode, and selectively communicating a respective set of data from among a plurality of different sets of data with an NFC device based upon the selected keyboard configuration mode.

Example mobile wireless communications devices may include portable or personal media players (e.g., music or MP3 players, video players, etc.), remote controls (e.g., television or stereo remotes, etc.), portable gaming devices, portable or mobile telephones, smartphones, tablet computers, etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

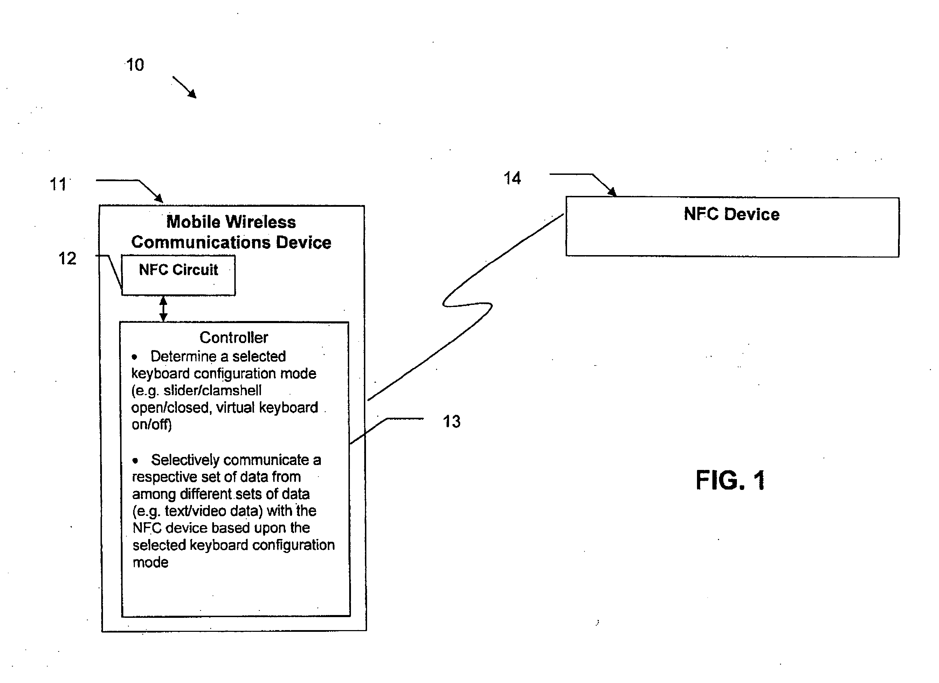

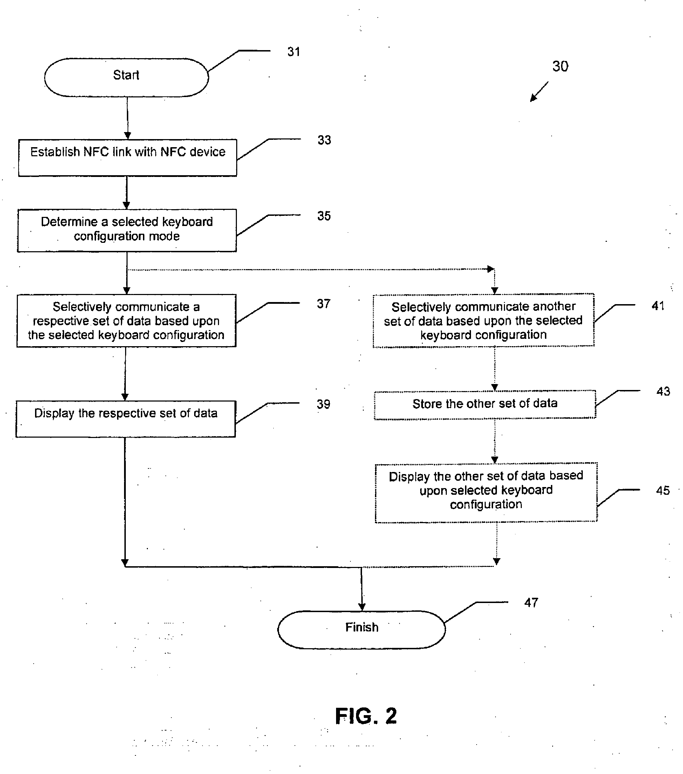

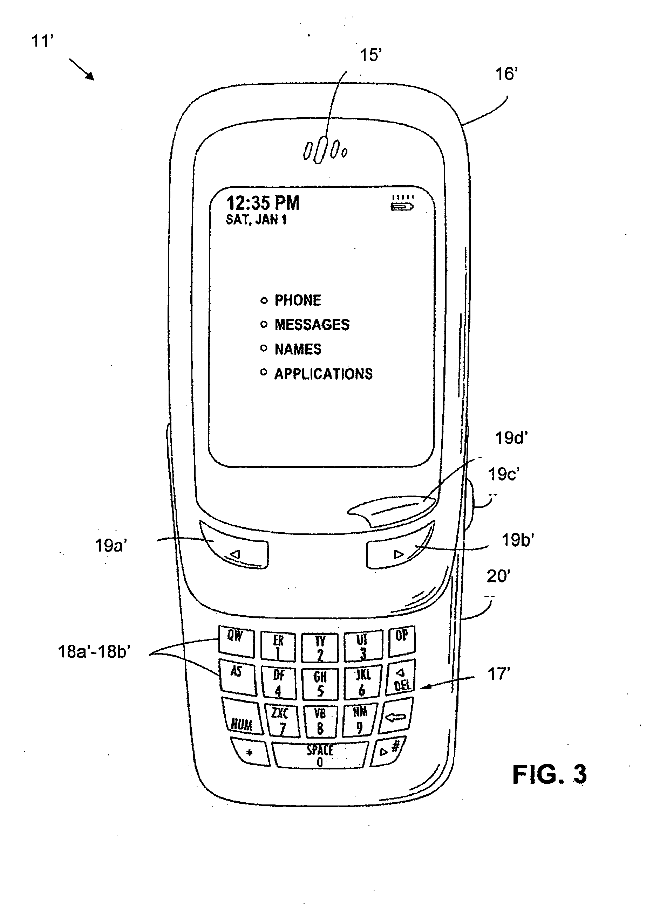

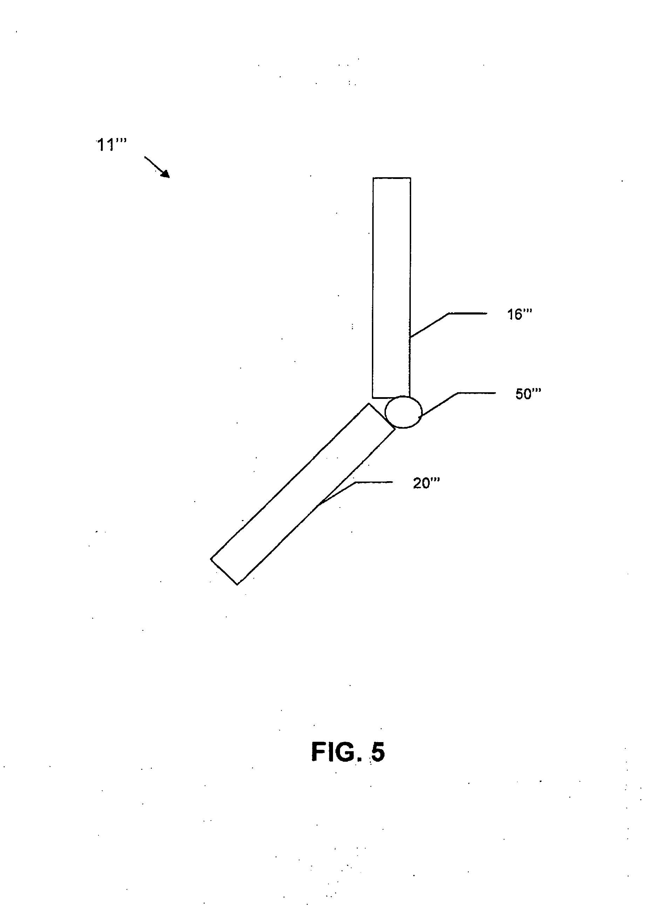

Referring initially to FIGS. 1-2, a wireless communication system **10** according to the present disclosure is now described. Moreover, with reference additionally to FIG. 2, a flowchart **30** illustrates a method of operating the wireless communication system **10** (Block **31).** The wireless communication system **10** illustratively includes an NFC device **14,** and a mobile wireless communications device **11.** The mobile wireless communications device **11** includes an NFC circuit **12,** a controller **13** coupled to the NFC circuit, a display (FIGS. 3-4) and a keyboard for receiving inputs (FIGS. 3-4). The mobile wireless communications device **11** has a plurality of different selectable keyboard configuration modes. For example, in embodiments where the keyboard comprises a virtual keyboard, i.e. touch screen embodiments, the different selectable keyboard configuration modes may comprise virtual keyboard on and off modes. In embodiments where the mobile wireless communications device **11** has a slider form factor (FIG. 3), the different selectable keyboard configuration modes may comprise slider keyboard open and closed configuration modes. Yet more, in other embodiments where the mobile wireless communications device **11** has a clamshell form factor (FIG. 5), the different selectable keyboard configuration modes may comprise flip keyboard open and closed configuration modes.

The mobile wireless communications device **11** and the NFC device **14** are illustratively in communication, in particular, the exchanging of a plurality of different sets of data (Block **33).** For example, the plurality of different sets of data may comprise a text set of data and a video set of data. In some embodiments, the NFC device **14** may be associated with a service position (e.g. a window advertisement), and the different sets of data may be associated with the same subject matter, i.e. the service position (e.g. the different sets of data are associated with the window advertisement and may comprise a digital video advertisement set of data and a text product description set of data).

During operation of the mobile wireless communications device **11,** the controller **13** is illustratively configured to determine a selected keyboard configuration mode (Block **35).** As typical with normal use, the keyboard of the mobile wireless communications device **11** frequently switches between selected keyboard configuration modes. Depending on the selected keyboard configuration mode, certain types of data are more readily viewed on the display of the mobile wireless communications device **11.** Accordingly, the controller **13** is illustratively configured to selectively communicate (transmit to and receive from) a respective set of data from among a plurality of different sets of data with the NFC device **14** based upon the selected keyboard configuration mode (Block **37).** In other words, given the current selected keyboard configuration mode, the controller **13** receives the set of data that would most readily be currently displayed by the mobile wireless communications device **11** from the NFC device **14** and then displays such data (Block **39),** thereby providing a more pleasing user experience.

In some embodiments (shown with shadowed lines in FIG. 2), the controller **13** may be configured to receive at least two different sets of data from the plurality of different sets (Block **41),** and shortly display a respective set of data from among the at least two different sets of data based upon the selected keyboard configuration mode (Block **39).** For example, if the keyboard is currently configured that text data is best displayed, the controller **13** receives both the video set of data and the associated test set of data, displaying the text set of data. Subsequent, the controller **13** illustratively stores the other set of data from among the at least two different sets of data for later viewing (Blocks **43 & 45),** i.e. the controller displays the video set of data later when the keyboard configuration makes displaying video data advantageous (Block **47).**

Of course, since the video data may be associated with the service position of the NFC device **14,** which may no longer be useful since the mobile wireless communications device **11** may be in another service position and communicating with another corresponding NFC device, the controller **13** may be configured to delete the stored set of data after a certain time period. Also, the controller can be configured to use other onboard transceivers, such as cellular and WiFi, to download the associated sets of data from the service position even if the mobile wireless communications device **13** moves outside the range of the NFC device **14,** which is typically limited. In other words, the controller **13** may coordinate the communication of a portion of the associated sets of data via NFC and the remaining (once the mobile wireless communications device **13** moves outside NFC range) portion via the other onboard transceivers.

In other words, as the mobile wireless communications device **11** encounters other NFC devices **14** and associated service positions, the controller **13** helpfully downloads the most appropriate form of data from a respective NFC device that is most easily viewed on the mobile wireless communications device given its current keyboard configuration mode. Referring again to the aforementioned window advertisement example, as the mobile wireless communications device **11** is swiped at different window advertisements (e.g. at a commercial mall) during use, the most convenient form of the associated set of data is consistently downloaded regardless of the selected keyboard configuration mode.

In some embodiments, the controller **13** may store user preference values for selecting which respective set of data from among a plurality of different sets of data to communicate with the NFC device **14.** For example, in touch screen embodiments, the controller **13** can be configured to communicate video sets of data when in the virtual keyboard off mode, i.e. the entire screen is available for display.

Referring now to FIG. 3, another embodiment of the mobile wireless communications device **11'** is now described. In this embodiment of the mobile wireless communications device **11',** those elements already discussed above with respect to FIGS. 1-2 are given prime notation and most require no further discussion herein. This embodiment differs from the previous embodiment in that the mobile wireless communications device **11'** further includes first and second housings **16', 20'** reciprocating therebetween via a sliding motion, a slider keyboard **17'** including a plurality of keys **18a'-18b'** on the second housing cooperating with the controller (not shown), other convenience switches **19a'-19d',** and an audio speaker **15'** on the first housing. More specifically, in this particular embodiment, the plurality of different selectable keyboard configuration modes comprises a slider keyboard open configuration mode and a slider keyboard closed configuration mode. Advantageously, the controller is configured to selectively receive a respective set of data from among a plurality of different sets of data from the NFC device (not shown). For example, with the slider keyboard **17'** in an open position, the controller may retrieve sets of data from the NFC device that may require a full screen or that may require text input.

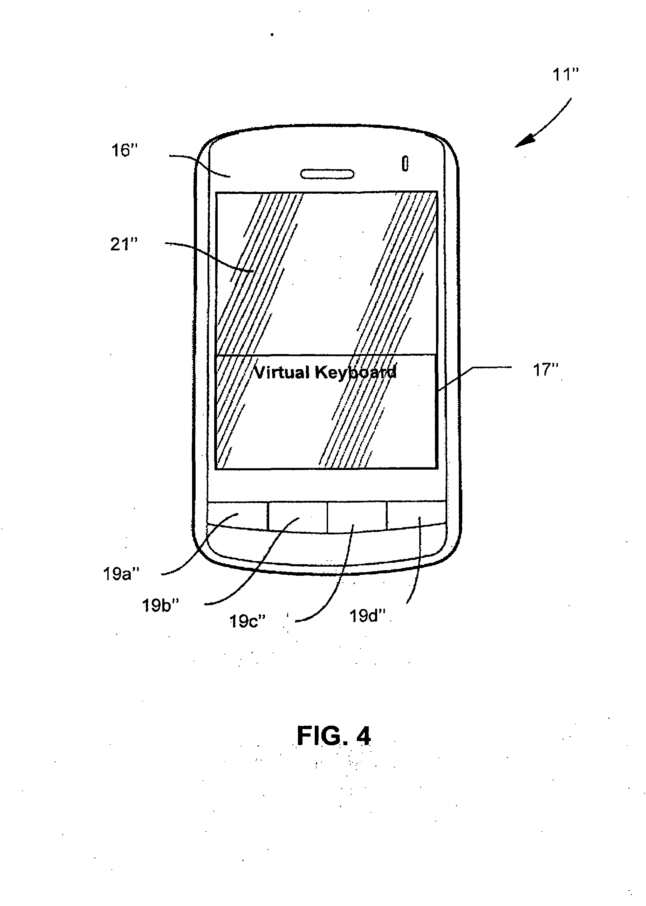

Referring now to FIG. 4, another embodiment of the mobile wireless communications device **11''** is now described. In this embodiment of the mobile wireless communications device **11'',** those elements already discussed above with respect to FIGS. 1-2 are given double prime notation and most require no further discussion herein. This embodiment differs from the previous embodiment in that the mobile wireless communications device **11''** further includes a candy-bar form factor housing **16'',** a touch screen display **21'',** a plurality of convenience keys **19a''-19d''** on the housing, and a virtual keyboard 17'' on the touch screen display.

More specifically, in this particular embodiment, the plurality of different selectable keyboard configuration modes comprises a virtual keyboard on configuration mode and a virtual keyboard off configuration mode. Advantageously, the controller (not shown) is configured to selectively receive a respective set of data from among a plurality of different sets of data from the NFC device (not shown). For example, with the virtual keyboard **17''** in an off mode, the controller may retrieve sets of data from the NFC device that may require a full screen, such as videos, pictures, etc., and with the virtual keyboard 17'' in an on mode, the controller may retrieve sets of data from the NFC device that may require text input or that still may be readily viewed with reduced available screen size.

Referring now to FIG. 5, another embodiment of the mobile wireless communications device **11'''** is now described. In this embodiment of the mobile wireless communications device **11''',** those elements already discussed above with respect to FIGS. 1-2 are given triple prime notation and most require no further discussion herein. This embodiment differs from the previous embodiment in that the mobile wireless communications device **11'''** illustratively includes a first housing **20'''** carrying the controller (not shown) and the NFC circuit (not shown), a second housing **16''',** and a hinge **50'''** coupling the first and second housings.

More specifically, in this particular embodiment, the plurality of different selectable keyboard configuration modes comprises a clamshell keyboard open configuration mode and a clamshell keyboard closed configuration mode. For example, with the mobile wireless communications device **11'''** in clamshell open mode, the controller may retrieve sets of data from the NFC device (not shown) that may require a full screen, such as videos, pictures, etc., and with the mobile wireless communications device **11'''** in a clamshell closed mode, the controller may retrieve sets of data from the NFC device that may be readily viewed with reduced screen real estate of the typical smaller status screen on the outer housing of the second housing **16'''.**

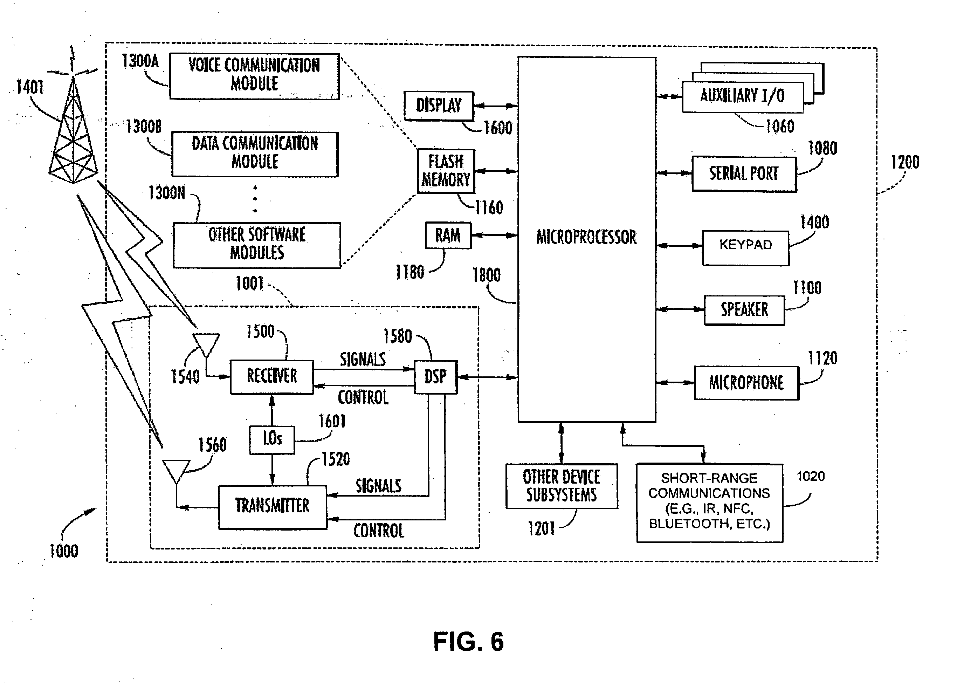

Example components of a mobile wireless communications device **1000** that may be used in accordance with the above-described embodiments are further described below with reference to FIG. 6. The device **1000** illustratively includes a housing **1200,** a keyboard or keypad **1400** and an output device **1600.** The output device shown is a display **1600,** which may comprise a full graphic liquid crystal display (LCD). Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display 1600, along with other input/output devices **1060, 1080, 1100** and 1120; as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem **1020.** The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as Advanced Mobile Phone System (AMPS), time division multiple access (TDMA), code division multiple access (CDMA), Wideband code division multiple access (W-CDMA), personal communications service (PCS), GSM (Global System for Mobile Communications), enhanced data rates for GSM evolution (EDGE), etc. Other types of data and voice networks, both separate and integrated, may also be utilized with the mobile device **1000.** The mobile device **1000** may also be compliant with other communications standards such as 3GSM, 3rd Generation Partnership Project (3GPP), Universal Mobile Telecommunications System (UMTS), 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP 1580 provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or an NFC sensor for communicating with an NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (11) operable in a plurality of different selectable keyboard configuration modes and comprising:
a near-field communication (NFC) circuit (12) ; and
a controller (13) coupled to said NFC circuit (12) and configured to determine a selected keyboard configuration mode, and communicate a set of data, from a plurality of sets of data, with at least one NFC device (14) based upon the selected keyboard configuration mode,
wherein the plurality of sets of data comprises a text set of data and a picture set of data.

2. The device (11) of Claim 1 wherein said controller (13) is configured to receive the set of data from at least one NFC device (14) based upon the selected keyboard configuration mode.

3. The device (11) of Claim 1 wherein said controller (13) is configured to transmit the set of data to at least one NFC device (14) based upon the selected keyboard configuration mode.

4. The device (11) of Claim 1 wherein the picture set of data comprises a video set of data.

5. The device (11) of Claim 1 wherein the sets of data are associated with the same subject matter.

6. The device (11) of Claim 1 wherein said controller (13) is configured to:
receive at least two different sets of data from the plurality of different sets;
display a respective set of data from among the at least two different sets of data based upon the selected keyboard configuration mode; and
store the other set of data from among the at least two different sets of data.

7. The device (11) of claim 1, further comprising a slider keyboard (17') cooperating with said controller (13); and wherein the plurality of different selectable keyboard configuration modes comprises a slider keyboard open configuration mode and a slider keyboard closed configuration mode.

8. The device (11) of claim 1, further comprising a touch screen display (21"); and wherein the plurality of different selectable keyboard configuration modes comprises a virtual keyboard (17") configuration on mode and a virtual keyboard configuration off mode.

9. The device (11) of Claim 1 further comprising a first housing (20''') carrying said controller (13) and said NFC circuit (12), a second housing (16'''), a hinge (50''') coupling said first and second housings, and a clamshell keyboard cooperating with said controller; and wherein the plurality of different selectable keyboard configuration modes comprises a clamshell keyboard open configuration mode and a clamshell keyboard closed configuration mode.

10. A communication system (10) comprising:
and at least one near-field communication (NFC) device (14);
and
the device (11) of any preceding claim.

11. A method of operating a mobile wireless communications device (11) having a plurality of different selectable keyboard configuration modes, the method comprising:
determining a selected keyboard configuration mode; and
selectively communicating a respective set of data from among a plurality of different sets of data with a near-field communication (NFC) device (14) based upon the selected keyboard configuration mode, wherein the plurality of different sets of data comprises a text set of data and a picture set of data.

12. The method of Claim 11 further comprising receiving the respective set of data from the NFC device (14) based upon the selected keyboard configuration mode.

13. The method of Claim 11 further comprising transmitting the respective set of data to the NFC device (14) based upon the selected keyboard configuration mode.

14. The method of Claim 11 wherein the picture set of data comprises a video set of data.

## Patentansprüche

1. Eine mobile drahtlose Kommunikationsvorrichtung (11), die in einer Vielzahl von unterschiedlichen auswählbaren Tastaturkonfigurationsmodi betriebsfähig ist und aufweist:
eine Nahfeldkommunikations(NFC - near-field communication)-Schaltung (12); und
eine Steuervorrichtung (13), die mit der NFC-Schaltung (12) gekoppelt ist und konfiguriert ist, einen ausgewählten Tastaturkonfigurationsmodus zu bestimmen und einen Satz von Daten aus einer Vielzahl von Sätzen von Daten mit zumindest einer NFC-Vorrichtung (14) basierend auf dem ausgewählten Tastaturkonfigurationsmodus zu kommunizieren,
wobei die Vielzahl von Sätzen von Daten einen Textdatensatz und einen Bilddatensatz aufweist.

2. Die Vorrichtung (11) gemäß Anspruch 1, wobei die Steuervorrichtung (13) konfiguriert ist zum Empfangen des Satzes von Daten von zumindest einer NFC-Vorrichtung (14) basierend auf dem ausgewählten Tastaturkonfigurationsmodus.

3. Die Vorrichtung (11) gemäß Anspruch 1, wobei die Steuervorrichtung (13) konfiguriert ist zum Senden des Satzes von Daten an zumindest eine NFC-Vorrichtung (14) basierend auf dem ausgewählten Tastaturkonfigurationsmodus.

4. Die Vorrichtung (11) gemäß Anspruch 1, wobei der Bilddatensatz einen Videodatensatz aufweist.

5. Die Vorrichtung (11) gemäß Anspruch 1, wobei die Sätze von Daten mit demselben Gegenstand assoziiert sind.

6. Die Vorrichtung (11) gemäß Anspruch 1, wobei die Steuervorrichtung (13) konfiguriert ist zum:
Empfangen zumindest zwei verschiedener Sätze von Daten von der Vielzahl von verschiedenen Sätzen;
Anzeigen eines jeweiligen Satzes von Daten aus den zumindest zwei verschiedenen Sätzen von Daten basierend auf dem ausgewählten Tastaturkonfigurationsmodus; und
Speichern des anderen Satzes von Daten aus den zumindest zwei verschiedenen Sätzen von Daten.

7. Die Vorrichtung (11) gemäß Anspruch 1, die weiter eine Schiebe-Tastatur (17') aufweist, die mit der Steuervorrichtung (13) zusammenarbeitet; und wobei die Vielzahl von verschiedenen auswählbaren Tastaturkonfigurationsmodi einen "Schiebe-Tastatur offen"-Konfigurationsmodus und einen "Schiebe-Tastatur geschlossen"-Konfigurationsmodus aufweist.

8. Die Vorrichtung (11) gemäß Anspruch 1, die weiter eine Berührungsbildschirmanzeige (21") aufweist; und wobei die Vielzahl von verschiedenen auswählbaren Tastaturkonfigurationsmodi einen "virtuelle Tastatur(17'')-Konfiguration ein"-Modus und einen "virtuelle Tastatur-Konfiguration aus"-Modus aufweist.

9. Die Vorrichtung (11) gemäß Anspruch 1, die weiter aufweist ein erstes Gehäuse (20'''), das die Steuervorrichtung (13) und die NFC-Schaltung (12) trägt, ein zweites Gehäuse (16'''), ein Gelenk (50'''), das die ersten und zweiten Gehäuse koppelt, und eine Klappe- bzw. Clamshell-Tastatur, die mit der Steuervorrichtung zusammenarbeitet; und wobei die Vielzahl von verschiedenen auswählbaren Tastaturkonfigurationsmodi einen "Clamshell-Tastatur offen"-Konfigurationsmodus und einen "Clamshell-Tastatur geschlossen"-Konfigurationsmodus aufweist.

10. Ein Kommunikationssystem (10), das aufweist:
zumindest eine Nahfeldkommunikations(NFC- near-field communication)-Vorrichtung (14); und
die Vorrichtung (11) gemäß einem vorhergehenden Anspruch.

11. Ein Verfahren zum Betreiben einer mobilen drahtlosen Kommunikationsvorrichtung (11), die eine Vielzahl von verschiedenen auswählbaren Tastaturkonfigurationsmodi hat, wobei das Verfahren aufweist:
Bestimmen eines ausgewählten Tastaturkonfigurationsmodus; und
selektives Kommunizieren eines jeweiligen Satzes von Daten aus einer Vielzahl von verschiedenen Sätzen von Daten mit einer Nahfeldkommunikations(NFC - near-field communication)-Vorrichtung (14) basierend auf dem ausgewählten Tastaturkonfigurationsmodus, wobei die Vielzahl von verschiedenen Sätzen von Daten einen Textdatensatz und einen Bilddatensatz aufweist.

12. Das Verfahren gemäß Anspruch 11, das weiter aufweist ein Empfangen des jeweiligen Satzes von Daten von der NFC-Vorrichtung (14) basierend auf dem ausgewählten Tastaturkonfigurationsmodus.

13. Das Verfahren gemäß Anspruch 11, das weiter aufweist ein Übertragen des jeweiligen Satzes von Daten an die NFC-Vorrichtung (14) basierend auf dem ausgewählten Tastaturkonfigurationsmodus.

14. Das Verfahren gemäß Anspruch 11, wobei der Bilddatensatz einen Videodatensatz aufweist.

## Revendications

1. Dispositif mobile de communication sans fil (11) pouvant fonctionner dans une pluralité de différents modes de configuration du clavier qui peuvent être sélectionnés et comprenant :
un circuit de communication en champ proche (NFC pour « *Near Field Communication* ») (12) ; et
un contrôleur (13) couplé audit circuit NFC (12) et configuré pour déterminer un mode sélectionné de configuration du clavier et pour communiquer un ensemble de données, parmi une pluralité d'ensembles de données, avec au moins un dispositif NFC (14), en fonction du mode sélectionné de configuration du clavier ;
dans lequel la pluralité d'ensembles de données comprend un ensemble de données de texte et un ensemble de données d'images.

2. Dispositif (11) selon la revendication 1, dans lequel ledit contrôleur (13) est configuré pour recevoir l'ensemble de données à partir d'au moins un dispositif NFC (14), en fonction du mode sélectionné de configuration du clavier.

3. Dispositif (11) selon la revendication 1, dans lequel ledit contrôleur (13) est configuré pour émettre l'ensemble de données vers au moins un dispositif NFC (14), en fonction du mode sélectionné de configuration du clavier.

4. Dispositif (11) selon la revendication 1, dans lequel l'ensemble de données d'images consiste en un ensemble de données vidéo.

5. Dispositif (11) selon la revendication 1, dans lequel les ensembles de données sont associés au même sujet.

6. Dispositif (11) selon la revendication 1, dans lequel ledit contrôleur (13) est configuré pour :
recevoir au moins deux ensembles différents de données parmi la pluralité de différents ensembles ;
afficher un ensemble respectif de données parmi lesdits au moins deux ensembles différents de données, en fonction du mode sélectionné de configuration du clavier ; et
stocker l'autre ensemble de données parmi lesdits au moins deux ensembles différents de données.

7. Dispositif (11) selon la revendication 1, comprenant en outre un clavier coulissant (17') qui coopère avec ledit contrôleur (13) ; et
dans lequel la pluralité de modes différents de configuration du clavier pouvant être sélectionnés comprend un mode de configuration avec clavier coulissant ouvert et un mode de configuration avec clavier coulissant fermé.

8. Dispositif (11) selon la revendication 1, comprenant en outre un écran d'affichage tactile (21'') ; et
dans lequel la pluralité de modes différents de configuration du clavier pouvant être sélectionnés comprend un mode de configuration avec clavier virtuel (17'') et un mode de configuration sans clavier virtuel.

9. Dispositif (11) selon la revendication 1, comprenant en outre un premier boîtier (20''') portant ledit contrôleur (13) et ledit circuit NFC (12), un second boîtier (16'''), une charnière (50''') accouplant lesdits premier et second boîtiers, et un clavier rabattable qui coopère avec ledit contrôleur ; et
dans lequel la pluralité de modes différents de configuration du clavier pouvant être sélectionnés comprend un mode de configuration avec clavier rabattable ouvert et un mode de configuration avec clavier rabattable fermé.

10. Système de communication (10) comprenant :
au moins un dispositif de communication en champ proche (NFC pour « *Near Field Communication* ») (14) ; et
le dispositif (11) selon l'une quelconque des revendications précédentes.

11. Procédé de fonctionnement d'un dispositif mobile de communication sans fil (11) possédant une pluralité de différents modes de configuration du clavier qui peuvent être sélectionnés, le procédé comprenant les étapes consistant à :
déterminer un mode sélectionné de configuration du clavier ; et
communiquer sélectivement un ensemble respectif de données, parmi une pluralité de différents ensembles de données, avec un dispositif de communication en champ proche (NFC) (14), en fonction du mode sélectionné de configuration du clavier, la pluralité d'ensembles de données comprenant un ensemble de données de texte et un ensemble de données d'images.

12. Procédé selon la revendication 11, comprenant en outre l'étape consistant à recevoir l'ensemble respectif de données du dispositif NFC (14), en fonction du mode sélectionné de configuration du clavier.

13. Procédé selon la revendication 11, comprenant en outre l'étape consistant à émettre l'ensemble respectif de données vers le dispositif NFC (14), en fonction du mode sélectionné de configuration du clavier.

14. Procédé selon la revendication 11, dans lequel l'ensemble de données d'images consiste en un ensemble de données vidéo.
